# EUROPÄISCHE PATENTSCHRIFT

(11) **EP 0 853 540 B1**
(45) Veröffentlichungstag und Bekanntmachung des Hinweises auf die Patenterteilung: **26.04.2000**
(21) Anmeldenummer: 96930949.1
(22) Anmeldetag: 02.10.1996
(51) Int. Cl.: B29C 45/17, B29C 45/67

(54) **SCHLIESSEINHEIT FÜR EINE SPRITZGIESSMASCHINE**
CLOSING UNIT FOR AN INJECTION MOULDING MACHINE
UNITE DE FERMETURE POUR UNE PRESSE D'INJECTION

(30) Priorität: 03.10.1995 CH 277895
(43) Veröffentlichungstag der Anmeldung: 22.07.1998
(73) Patentinhaber: Ettlinger Kunststoffmaschinen GmbH, 86343 Königsbrunn (DE)
(72) Erfinder: GANZ, Martin, CH-8050 Zürich (CH); SILLMANN, Paul, CH-4563 Gerlafingen (CH)
(74) Vertreter: Ritscher, Thomas, Dr.
(86) Internationale Anmeldenummer: CH9600344
(87) Internationale Veröffentlichungsnummer: WO9712742

(56) Entgegenhaltungen:
- DE-C- 4 426 521
- DE-U- 9 212 480
- GB-A- 2 012 206
- US-A- 5 143 736

## Beschreibung

Die vorliegende Erfindung betrifft eine Schliesseinheit gemäss Oberbegriff des Anspruchs 1.

Standard-Spritzgiessmaschinen weisen Schliesseinheiten auf, bei denen die Aufspannplatten mit mehreren Holmen geführt werden. Für bestimmte Anwendungen werden heute jedoch vermehrt holmlose Schliesseinheiten eingesetzt, insbesondere bei der Produktion von Kunststoff-Kleinteilen, da die Aufspannplatten bei holmlosen Schliesseinheiten besser abgestützt werden können und damit der Verformung derselben - und deshalb der Gratbildung beim Produkt - besser entgegengewirkt werden kann. Ein weiterer Vorteil der holmlosen Schliesseinheiten ist in der freien Zugänglichkeit für die Entnahme der Spritzgussteile und die Wartung der Formplatten zu sehen.

So sind beispielsweise aus der DE-43'08'701 oder EP-0'554'068 holmlose Schliesseinheiten bekannt, bei denen die Aufspannplatten in einem C-förmigen Maschinenrahmen angeordnet sind, wobei die eine Aufspannplatte an einem Schenkel dieses C-Rahmens fixiert ist und die andere Aufspannplatte mit Hilfe einer sich am gegenüberliegenden Schenkel des C-Rahmens abstützenden Hydraulik bewegt wird. Um die durch das elastische Aufbiegen des C-Rahmens beim Spritzvorgang erzeugte Plattenöffnung zu kompensieren, ist der Kolben gegenüber dem Zylinder oder gegenüber der verschiebbaren Aufspannplatte verschwenkbar gelagert. Aus denselben Gründen wird in der DE-42'30'348 auf die Verwendung eines Kniehebelmechanismus hingewiesen.

Um bei holmlosen Schliesseinheiten den Einfluss der beim Spritzvorgang erzeugten Verformung des Maschinenrahmens weiter zu vermindern, wurde beispielsweise mit der DE-U-92'12'480, EP-554'068 oder DE-43'08'962 vorgeschlagen, einen verformbaren C-förmigen Bügel mit dem stationären Formträger einerseits und der Hydraulikzylinder-Abstützplatte andererseits gelenkig zu verbinden. Mit einem derartigen C-Bügel können die durch die Schliesskräfte auf den Maschinenrahmen ausgeübten Verformungen aufgefangen werden. Leider erweist es sich jedoch, dass auch bei Verwendung solcher C-Bügel die Plattenparallelität nicht in allen Fällen gewährleistet ist und die Formplatten, insbesondere bei Spritzvorgängen unter hohem Druck nicht mehr sicher schliessen. Diese Schliesseinheiten eignen sich nicht mehr für die Verarbeitung von hochtechnischen Kunststoffen, bei denen Schliesskräfte von bis zu 3000N (entsprechend 300 Tonnen) und mehr aufgefangen werden müssen.

Es ist deshalb Aufgabe der vorliegenden Erfindung eine holmlose Schliesseinheit für eine Spritzgiessmaschine zu schaffen, mit welcher qualitativ einwandfreie Präzisions-Kunststoff-Kleinteile gefertigt werden können. Insbesondere soll eine holmlose Schliesseinheit geschaffen werden, deren Formplatten auch bei hohen Schliesskräften fugenfrei schliessen.

Diese Aufgabe wird erfindungsgemäss durch eine Schliesseinheit mit den Merkmalen des Anspruchs 1 gelöst. Insbesondere weist diese Schliesseinheit fest montierte Trägerschienen mit einer stationären und einer darauf verschiebbaren Aufspannplatte auf. Hinter den jeweiligen Aufspannplatten sind Drehlager angeordnet, in denen ein Schliessantrieb angelenkt ist. Dieser Schliessantrieb ist weder an den Trägerschienen noch am Maschinensockel abgestützt, sondern zwischen Drehlagern frei beweglich eingehängt.

Es erweist sich, dass durch diese erfindungsgemässe Konstruktion ein im Vergleich zu den obenerwähnten C-Bügel-Systemen überraschend guter Formschluss erzielt wird. Dies kann darauf zurückgeführt werden, dass durch diese Konstruktion beim Formschluss einerseits keine Dreh- oder Biegemomente auf den Maschinenrahmen (Maschinensockel kolben zwischen der verschiebbaren Aufspannplatte und der Hydraulik-Zylinder-Abstützplatte erzeugen können.

In einer ersten bevorzugten Ausführungsform sind zwei Trägerschienen parallel zu einander auf einem Maschinensockel so fixiert, dass dazwischen drei nebeneinander liegende Einspritzeinheiten angeordnet werden können. Diese Trägerschienen weisen je einen laschenartig nach oben ragenden Abstützblock auf, an denen die feste Aufspannplatte angebracht ist. Diese feste Aufspannplatte ist einfacherweise mit diesen Abstützblöcken fest verschraubt, kann aber ebenso gut angeschweisst sein. Es versteht sich, dass diese Aufspannplatte bei entsprechender Dimensionierung direkt an der Trägerschiene befestigt werden kann und damit auf den Abstützblock verzichtet werden kann. Dieser festen Aufspannplatte benachbart ist eine verschiebbare Aufspannplatte angeordnet, welche an zwei auf den beiden Trägerschienen gleitenden Gleitschuhen fixiert ist. Hinter den Aufspannplatten sind im Abstützblock einerseits und im Gleitschuh andererseits jeweils ein Drehlager vorgesehen, in welche ein Schliessantrieb eingehängt ist. Dieser Schliessantrieb hängt also frei zwischen den jeweiligen Drehlagern. Solche Schliessantriebe sind dem Fachmann hinlänglich bekannt und bestehen im wesentlichen aus zwei gegen einander bewegbaren Bau- resp. Antriebsteilen, die zu einer Schliess- oder Öffnungbewegung führen. Erfindungsgemäss ist jedes dieser beiden Antriebsteile eines beliebigen Schliessantriebs mit einem der obigen Drehlager verbunden.

Bei der bevorzugten Ausführungsform wird ein Hydraulikantrieb verwendet, dessen Zylinder mit dem hinter der festen Aufspannplatte liegenden Drehlager gekoppelt ist, während der Kolben dieser Hydraulik mit dem hinter der verschiebbaren Aufspannplatte liegenden Drehlager gekoppelt ist. Diese Kopplung wird mit Hebelarmen hergestellt, die einerseits starr am Zylinder resp. Kolben befestigt sind und andererseits drehbar in die jeweiligen Drehlager eingreifen. Dadurch können die Kräfte des Schliessantriebs über die U-förmig angewinkelten Hebelarme direkt auf die Aufspannplatten und damit auf die Formplatten übertragen werden. Auch wenn bei erhöhten Schliesskräften die Reaktionskräfte der Formplatten zu einer Verbiegung des Schliessantriebs führen können, bleiben dabei die Formplatten planparallel, d.h. erzeugt eine allfällige Verbiegung des Schliessantriebs keine Fuge zwischen den Formplatten.

In einer bevorzugten Weiterbildung der erfindungsgemässen Schliesseinheit sind die jeweiligen Antriebsteile des Schliessantriebs über scherenartig gekreuzte Hebelarme mit den Drehlagern gekoppelt.

Durch das freie Aufhängen des Schliessantriebs an den Drehlagern werden bei beiden Ausführungsformen keine Biegemomente auf dem Maschinensockel oder die Trägerschienen ausgeübt und bleiben die Formplatten planparallel.

Im folgenden soll die Erfindung anhand eines Ausführungsbeispiels und der Figuren näher erläutert werden. Es zeigen:
Fig. 1: einen Seitenriss einer Ausführungsform der erfindungsgemässen Schliesseinheit ohne Schliessantrieb;
Fig. 2: einen Seitenriss einer Ausführungsform der erfindungsgemässen Schliesseinheit mit Schliessantrieb.

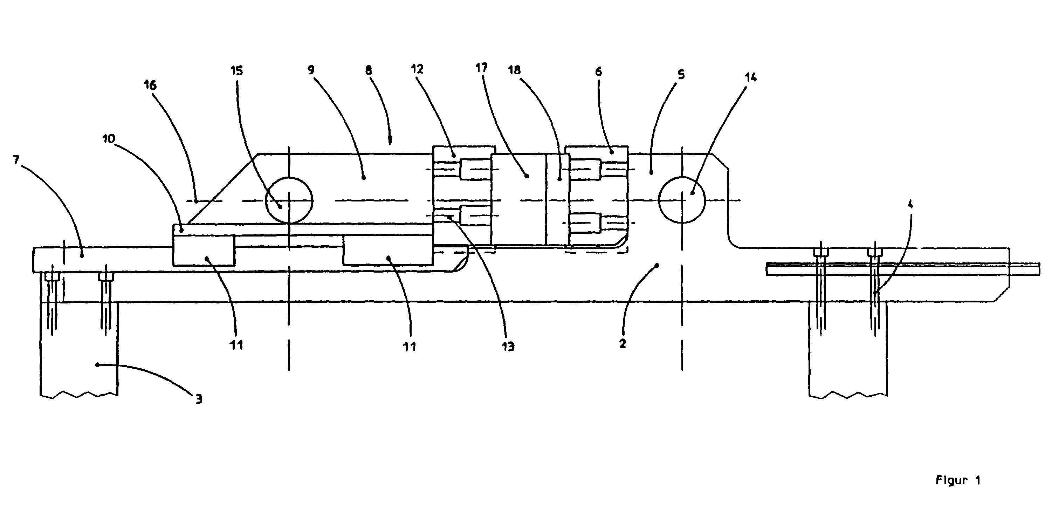

Aus Figur 1 sind die wesentlichen Bauteile für die Basiskonstruktion der erfindungsgemässen Schliesseinheit ersichtlich. Diese Basis umfasst in der vorliegenden Ausführungsform zwei parallele Trägerschienen 2, die auf einem Maschinensockel 3 mittels geeigneter Befestigungsmittel 4 fixiert sind. Diese Trägerschienen 2 sind symmetrisch zueinander und weisen einen nach oben ragenden Abstützblock 5 auf. An der dem Formschluss zugewandten Flanke dieses Abstützblocks 5 ist eine stationäre Aufspannplatte 6 derart befestigt, dass eine starre Verbindung zwischen der Aufspannplatte 6 und dem Abstützblock 5 gewährleistet ist. Die Trägerschiene 2 weist darüberhinaus einen als Gleitstrecke 7 ausgebildeten Abschnitt auf, auf dem ein Gleitschuh 8 aufgesetzt ist. Dieser Gleitschuh umfasst im wesentlichen eine Abstützplatte 9, welche auf einer Basisplatte 10 steht. Die Basisplatte 10 ruht auf Gleitern 11, die auf der Gleitstrecke 7 aufliegen. Derart kann der Gleitschuh 8 auf der Gleitstrecke 7 in Schliess- und Öffnungsrichtung frei bewegt werden. Es versteht sich, dass das Profil von der Gleitstrecke 7 und die Profile der Gleiter 11 aufeinander abgestimmt sind. Am Gleitschuh 8 ist formschlusseitig eine zweite Aufspannplatte 12 mit geeigneten Mitteln 13 befestigt, welche Aufspannplatte 12 damit auf der Trägerschiene verschiebbar ist. Diese Mittel 13 sind nicht notwendigerweise, aber vorteilhafterweise so ausgebildet, dass die Aufspannplatte 12 zu Wartungszwecken wieder vom Gleitschuh 8 gelöst werden kann. Es versteht sich, dass diese verschiebbare Aufspannplatte 12 auch gelenkig am Gleitschuh 8 befestigt sein kann. Erfindungsgemäss sind hinter den jeweiligen Aufspannplatten 6 resp. 12, im vorliegenden Ausführungsbeispiel also zentral im Abstützblock 5 der Trägerschiene 2 und in der Abstützplatte 9 des Gleitschuhs 8 jeweils ein Drehlager 14 resp. 15 vorgesehen.

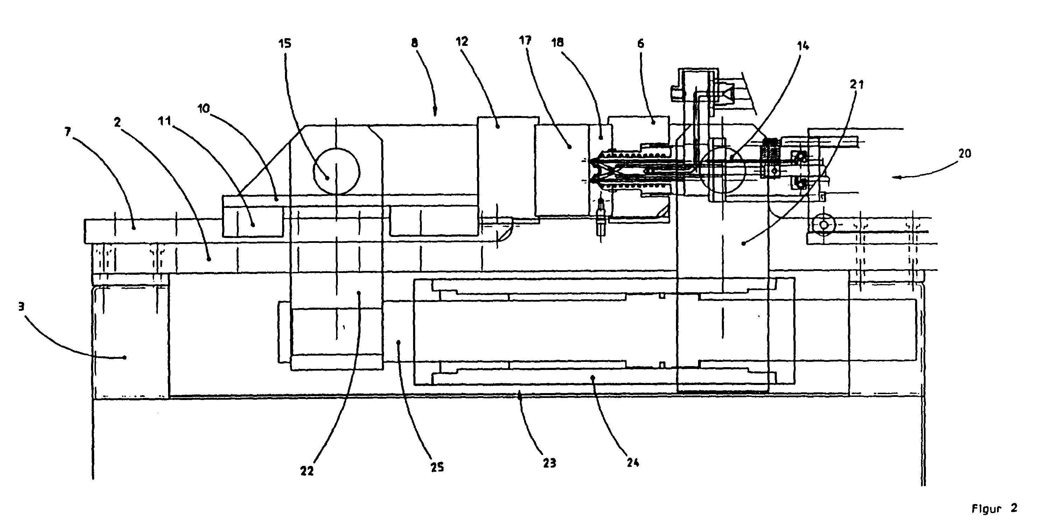

Figur 2 zeigt die erfindungsgemässe Schliesseinheit in Verbindung mit einer Einspritzeinheit 20. Bei der dargestellten Ausführungsform sind in den Drehlagern 14, 15 Hebelarme 21 resp. 22 angelenkt, welche eine Hydraulik 23 tragen. Diese Hydraulik 23 umfasst im wesentlichen einen Hydraulikzylinder 24 und einen Hydraulikkolben 25, welche in bekannter Weise gegeneinander abgedichtet und verschiebbar sind. Eine dazugehörige Steuereinheit ist mit der Steuerung der Spritzgiessmaschine gekoppelt. Der am Abstützblock 5 angelenkte Hebelarm 21 ist im gezeigten Ausführungsbeispiel starr mit dem Hydraulikzylinder 24 verbunden, während der am Gleitschuh 8 angelenkte Hebelarm 22 starr am Hydraulikkolben 25 befestigt ist. Dadurch kann der Gleitschuh 8 den Bewegungen des Hydraulikkolbens 25 unmittelbar folgen. Bei der vorliegenden Ausführungsform beträgt der Öffnungsweg 150 mm und haben die Formplatten eine Grösse von 3 x 120 x 97 mm. Ein Formschluss wird somit durch das Ineinanderschieben der beiden gegenläufig zueinander bewegbaren Hydraulikbauteile erreicht. Bei erhöhter Schliesskraft - im vorliegenden Beispiel über 100 kN - erlaubt es die erfindungsgemässe Konstruktion, dass das durch diese Schliesskraft erzeugte Drehmoment zwischen der Hydraulik 23 und den Hebelarmen 21, 22 zu einem Durchbiegen der gesamten Hydraulik 23 führt, dabei jedoch die Aufspannplatten 6, 12 wegen der Drehlager 14, 15 stets planparallel bleiben.

Die vorliegende Erfindung erlaubt es, die Hebelarme 21, 22 so kurz wie möglich auszubilden und die beiden Drehlager 14, 15 so nahe wie möglich zueinander zu legen, um die beim Formschluss auftretenden und auf den Schliessantrieb wirkenden Biegekräfte möglichst klein zu halten.

In einer weiteren Ausführungsform können jeweils zwei Schliessantriebe mit demselben Drehlagerpaar verbunden werden, bspw. so, dass der eine Schliessantrieb U-förmig angelenkt ist, während der zweite Schliessantrieb über gekreuzte Hebelarme an denselben Drehlagern angreift. Derart gekoppelte Schliessantriebe können sich insbesondere bei Anwendung hoher Schliesskräfte gemeinsam unterstützen oder beim Betrieb mit raschen Arbeitszyklen gegenseitig ergänzen.

Es versteht sich für den Fachmann, die normalerweise auf jeder Trägerschienenseite angeordneten Schliessantriebe mit einer geeigneten Steuerung zu koordinieren und/oder mechanisch miteinander zu verstreben. Entsprechende Steuerungen liegen im Bereich des fachmännischen Könnens. Weitere Anwendungsmöglichkeiten des Funktionsprinzips der erfindungsgemässen Schliesseinheit können in holmlosen Press- und Stanzvorrichtungen gesehen werden. Anstelle der Hydraulik können ebensogut elektromechanische, pneumatische oder elektromagnetische Antriebe verwendet werden.

## Patentansprüche

1. Holmlose Schliesseinheit für eine Spritzgiessmaschine mit mindestens einem zwei gegeneinander bewegbare Bauteile umfassenden Schliessantrieb (23),
mit auf einem Maschinensockel (3) befestigbaren Trägerschienen (2) für eine stationäre und eine verschiebbare Aufspannplatte (6, 12) zum Aufspannen von mindestens einer ersten und zweiten Formplatte (17, 18), welche stationäre Aufspannplatte (6) an den Trägerschienen (2) starr befestigt ist und welche verschiebbare Aufspannplatte (12) auf den Trägerschienen (2) gleitbar abgestützt ist,
wobei die feste Aufspannplatte (6) über mindestens ein Drehlager (14) mit dem einen der beiden Bauteile (24, 25) des Schliessantriebs (23) verbunden ist,
dadurch gekennzeichnet, dass
die bewegliche Aufspannplatte (12) über mindestens ein Drehlager (15) mit dem anderen der beiden Bauteile (24, 25) des Schliessantriebs (23) verbunden ist, derart dass der Schliessantrieb (23) nur in diesen Drehlagern (14, 15) befestigt ist, wodurch die Schliesskräfte des Schliessantriebs (23) nur über diese Drehlager (14, 15) auf die Aufspannplatten (6, 12) wirken und keine Biegekräfte auf die Trägerschienen (2) oder den Maschinensockel (3) übertragen werden.

2. Schliesseinheit nach Anspruch 1, dadurch gekennzeichnet, dass zwischen jedem der zwei gegeneinander bewegbaren Antriebsteile (24, 25) des Schliessantriebs (23) und dem mit diesem Antriebsteil verbundenen Drehlager (14, 15) ein Hebelarm (21, 22) vorgesehen ist.

3. Schliesseinheit nach Anspruch 2, dadurch gekennzeichnet, dass die Hebelarme (21, 22) mit den bewegbaren Antriebsteilen (24, 25) des Schliessantriebs (23) jeweils starr verbunden sind.

4. Schliesseinheit nach Anspruch 2, dadurch gekennzeichnet, dass die Hebelarme (21, 22) scherenartig angeordnet sind und mit den bewegbaren Antriebsteilen (24, 25) des Schliessantriebs (23) beweglich verbunden sind.

5. Schliesseinheit nach einem der Ansprüche 1 bis 4, dadurch gekennzeichnet, dass die Trägerschiene (2) einen Abstützblock (5) aufweist, an welchem die stationäre Aufspannplatte (6) starr befestigt ist.

6. Schliesseinheit nach Anspruch 5, dadurch gekennzeichnet, dass im Abstützblock (5) ein Drehlager (14) vorgesehen ist.

7. Schliesseinheit nach Anspruch 1, dadurch gekennzeichnet, dass die verschiebbare Aufspannplatte (12) an einem Gleitschuh (8) befestigt ist, in welchem eines der Drehlager (15) angeordnet ist.

8. Schliesseinheit nach Anspruch 1, dadurch gekennzeichnet, dass als Schliessantrieb (23) ein Hydraulikantrieb vorgesehen ist.

9. Schliesseinheit nach Anspruch 1, dadurch gekennzeichnet, dass als Schliessantrieb (23) ein Elektromotor vorgesehen ist.

10. Schliesseinheit nach Anspruch 1, dadurch gekennzeichnet, dass als Schliessantrieb (23) ein Elektromagnet vorgesehen ist.

11. Schliesseinheit nach Anspruch 1, dadurch gekennzeichnet, dass als Schliessantrieb (23) ein pneumatischer Antrieb vorgesehen ist.

## Claims

1. Closing unit without bars for an injection moulding machine having at least one closing drive (23) comprising two counter-moving displaceable components, with supporting rails (2) being mountable on a machine base (3) for a stationary and a glidable clamping plate (6, 12) for clamping one or more first and second form plates (17, 18), which stationary clamping plate (6) is rigidly connected to the supporting rails (2) and which displaceable clamping plate (12) is glidably supported on the supporting rails (2), whereby the stationary clamping plate (6) is connected to one of the two components (24, 25) of the closing drive (23) by means of at least one pivot bearing (14), characterized in that the glidable clamping plate (12) is connected to the other of the two components (24, 25) of the closing drive (23) by means of at least one pivot bearing (15) in such a manner that the closing drive (23) is secured only in these pivot bearings (14, 15), and thus the closing forces of the closing drive (23) only act upon the clamping plates (6, 12) via these pivot bearings (14, 15), and no bending moments are transmitted to the supporting rails (2) or to the machine base (3).

2. Closing unit according to claim 1, characterized in that a lever arm (21, 22) is provided between each of the two counter-moving drive components (24, 25) of the closing drive (23) and the pivot bearing (14, 15) connected to such drive component.

3. Closing unit according to claim 2, characterized in that the lever arms (21, 22) are rigidly connected to the displaceable drive components (24, 25) of the closing drive (23).

4. Closing unit according to claim 2, characterized in that the lever arms (21, 22) are arranged in a scissorlike manner and are displaceably connected to the displaceable drive components (24, 25) of the closing drive (23).

5. Closing unit according to one of claims 1 to 4, characterized in that the supporting rail (2) comprises a support block (5) to which the stationary clamping plate (6) is rigidly attached.

6. Closing unit according to claim 5, characterized in that a pivot bearing (14) is provided in the support block (5).

7. Closing unit according to claim 1, characterized in that the glidable clamping plate (12) is connected to a glide shoe (8) in which one of the pivot bearings (15) is arranged.

8. Closing unit according to claim 1, characterized in that the closing drive (23) is a hydraulic drive.

9. Closing unit according to claim 1, characterized in that the closing drive (23) is an electric motor.

10. Closing unit according to claim 1, characterized in that the closing drive (23) is an electromagnet.

11. Closing unit according to claim 1, characterized in that the closing drive (23) is a pneumatic drive.

## Revendications

1. Unité de fermeture sans longeron pour une presse d'injection avec au moins un dispositif d'entraînement de la fermeture (23) comprenant deux éléments mobiles l'un vers l'autre,
des barres de guidage (2) pouvant être fixées sur un bâti machine (3) destiné à recevoir une plaque de bridage stationnaire (6) et une plaque de bridage coulissante (12) destinées au montage d'au moins une première et une seconde coquille d'injection (17, 18),
ladite plaque de bridage fixe (6) étant montée rigidement sur les barres de guidage (2) et ladite plaque de bridage coulissante (12) étant montée coulissante sur les barres de guidage (2),
la plaque de bridage fixe (6) étant reliée par au moins un palier pivotant (14) à l'un des deux éléments (24, 25) du dispositif d'entraînement de la fermeture (23),
caractérisée en ce que
la plaque de bridage mobile (12) est relié par au moins un palier pivotant (15) à l'autre des deux éléments (24, 25) du dispositif d'entraînement de la fermeture (23), de telle sorte que le dispositif d'entraînement de la fermeture (23) ne soit fixé que dans ces paliers pivotants (14, 15), les efforts de fermeture créés par le dispositif d'entraînement de la fermeture (23) agissant ainsi uniquement par l'intermédiaire de ces paliers pivotants (14, 15) sur les plaques de bridage (6, 12), aucun effort de flexion n'étant transmis aux barres de guidage (2) ou au bâti machine (3).

2. Unité de fermeture selon la revendication 1, caractérisée en ce qu'un bras de levier (21, 22) est prévu entre chacun des deux éléments (24, 25) du dispositif d'entraînement de la fermeture (23) mobiles l'un vers l'autre et les paliers pivotants (13, 14) reliés respectivement à ces éléments.

3. Unité de fermeture selon la revendication 2, caractérisée en ce que les bras de levier (21, 22) sont chacun reliés rigidement aux éléments (24, 25) du dispositif d'entraînement de la fermeture (23).

4. Unité de fermeture selon la revendication 2, caractérisée en ce que les bras de levier (21, 22) sont disposés en forme de ciseaux et sont reliés de manière mobile aux éléments mobiles (24, 25) du dispositif d'entraînement de la fermeture (23).

5. Unité de fermeture selon l'une des revendications 1 à 4, caractérisée en ce que les barres de guidage comprennent un bloc de fixation (5) sur lequel est fixée rigidement la plaque de bridage (6).

6. Unité de fermeture selon la revendication 5, caractérisée en ce qu'un palier pivotant (14) est prévu dans le bloc de fixation (5).

7. Unité de fermeture selon la revendication 1, caractérisée en ce que la plaque de bridage coulissante (12) est fixée à un sabot (8) dans lequel est disposé un palier pivotant (15).

8. Unité de fermeture selon la revendication 1, caractérisée en ce que le dispositif d'entraînement de la fermeture (23) est un dispositif hydraulique.

9. Unité de fermeture selon la revendication 1, caractérisée en ce que le dispositif d'entraînement de la fermeture (23) est un moteur électrique.

10. Unité de fermeture selon la revendication 1, caractérisée en ce que le dispositif d'entraînement de la fermeture (23) est un électro-aimant.

11. Unité de fermeture selon la revendication 1, caractérisée en ce que le dispositif d'entraînement de la fermeture (23) est un entraînement pneumatique.
